# EUROPEAN PATENT APPLICATION

(11) **EP 4 629 130 A1**
(43) Date of publication of application: **08.10.2025**
(21) Application number: 25161965.6
(22) Date of filing: 05.03.2025
(51) Int. Cl.: G06F 30/394, H01L 23/528, G06F 119/06, H10D 84/90, H10D 89/10, G06F 30/392

(54) **INTEGRATED CIRCUIT INCLUDING DIAGONAL POWER PATTERN AND METHOD OF MANUFACTURING THE SAME**

(30) Priority: 01.04.2024 KR 20240044377; 27.06.2024 KR 20240084821
(71) Applicant: Samsung Electronics Co., Ltd., Suwon-si, Gyeonggi-do 16677 (KR)
(72) Inventor: LEE, Woonki, 16677 Suwon-si (KR); KIM, Hyunjoong, 16677 Suwon-si (KR); SHIN, Seongyong, 16677 Suwon-si (KR); CHOI, Inyoung, 16677 Suwon-si (KR)
(74) Representative: Marks & Clerk LLP

(57) **Abstract**

An integrated circuit includes a standard cell, a power rail extending in a first direction in a first wiring layer and configured to supply power to the standard cell, and an upper power pattern disposed in a second wiring layer above the first wiring layer. The upper power pattern includes a plurality of rectangular upper power patches extending in the first direction, and configured to supply power to the power rail. Corner portions of the plurality of upper power patches overlap each other in a direction between the first direction and a second direction that intersects the first direction.

## Description

### 1. Technical Field

The inventive concept is directed to an integrated circuit, and more particularly, to an integrated circuit including a diagonal power pattern and a method of manufacturing the same.

### 2. Discussion of Related Art

Integrated circuits (ICs) are compact electronic devices that integrate multiple electronic components, such as transistors, diodes, resistors, and capacitors, onto a single piece of semiconductor material, typically silicon. These components are interconnected to perform specific functions, such as processing, memory storage, or signal amplification.

To ensure the performance of an integrated circuit (IC), it is necessary to supply power evenly throughout the integrated circuit. A power delivery network located on the IC may be used to supply the power evenly. The power delivery network includes a grid of power and ground lines. The grid may be connected to external power sources via power pads or bumps in flip-chip designs.

However, as the integration level of integrated circuits increases, more wires for transmitting various signals are formed in wiring layers of integrated circuits. Therefore, a degree of freedom in arranging the lines constituting the power delivery network is limited.

### SUMMARY

At least one embodiment of the inventive concept provides an integrated circuit including a power pattern having a diagonally extended outline to provide a degree of freedom, increase power integrity and reduce voltage drops and a method of manufacturing the integrated circuit.

According to an embodiment of the inventive concept, there is provided an integrated circuit including a standard cell, a power rail extending in a first direction in a first wiring layer and configured to supply power to the standard cell, and an upper power pattern disposed in a second wiring layer above the first wiring layer, having a plurality of rectangular upper power patches extending in the first direction, and configured to supply power to the plurality of power rails. Corner portions of the plurality of upper power patches overlap each other in a direction between the first direction and a second direction that intersects the first direction.

According to an embodiment of the inventive concept, there is provided a method of manufacturing an integrated circuit. The method includes: obtaining input data that defines the integrated circuit including a standard cell; arranging the standard cell in a substrate layer; arranging a power rail extending in a first direction in a first wiring layer above the substrate layer, the power rail configured to provide a power voltage to the standard cell; arranging an upper power pattern in a second wiring layer above the first wiring layer, the upper power pattern including a plurality of rectangular upper power patches extending in the first direction, wherein corner portions of the plurality of upper power patterns overlap each other in a direction between the first direction and a second direction intersecting the first direction, and configured to provide the power voltage to the power rail; and manufacturing the integrated circuit based on the arrangement of the standard cell, the power rail and the upper power pattern.

In some embodiments, the steps of arranging the standard cell, arranging the power rail, and arranging the upper power pattern may comprise updating data (e.g. the input data) that defines the integrated circuit. The step manufacturing the integrated circuit based on the arrangement of the standard cell may comprise manufacturing the integrated circuit based on this updated data.

In some embodiments, the method may further comprise arranging a lower power pattern in a third wiring layer between the first wiring layer and the second wiring layer, the lower power pattern including a plurality of rectangular lower power patches extending in the second direction and have corner portions overlapping each other in a direction between the first direction and the second direction, the lower power pattern connected to the upper power pattern and configured to provide the power to the power rail.

According to an embodiment of the inventive concept, there is provided an integrated circuit including standard cells arranged in a plurality of rows extending in a first direction and adjacent to each other in a second direction intersecting the first direction, a plurality of power rails extending in the first direction in a first wiring layer and configured to supply power to the plurality of standard cells, and an upper power pattern disposed in a second wiring layer above the first wiring layer and having a plurality of upper power patches extending in the first direction. Corner portions of the upper power patches overlap in a direction between the first direction and the second direction, and the upper power pattern is configured to supply the power to the plurality of power rails.

According to an embodiment of the inventive concept, there is provided an integrated circuit including a plurality of power rails, a plurality of power patterns and a plurality of vias. a plurality of power rails extending in a first direction within a first wiring layer, the plurality of power rails configured to supply power to standard cells arranged in rows within the integrated circuit. The plurality of power patterns is disposed in a second wiring layer above the first wiring layer. The plurality of power patterns extends diagonally with respect to the first direction and a second direction intersecting the first direction. The plurality of vias electrically connect the plurality of power patterns to the plurality of power rails. A first power pattern from among the plurality of power patterns supplies a first power voltage to at least one of the power rails. A second power pattern from among the plurality of power patterns supplies a second power voltage different from the first power voltage to at least one other one of the power rails.

The following features may apply to any of the above described embodiments.

The first direction may be perpendicular to the second direction. Both the first direction and the second direction may be perpendicular to a vertical direction of the integrated circuit, i.e. both the first direction and the second direction may be parallel to a surface of a substrate of the integrated circuit.

The corner portions of the upper power patches overlap each other in a direction that is between the first direction and the second direction and that is perpendicular to the vertical direction, i.e. parallel to the substrate. This direction between the first direction and the second direction is a diagonal direction.

The upper power pattern comprises an outline formed by overlapping of the rectangular upper power patches.

The plurality of rectangular power patches extend in the first direction. In other words, each of the plurality of rectangular power patches may each have a length extending in the first direction.

In some embodiments, the integrated circuit further comprises a lower power pattern in a third wiring layer disposed between the first wiring layer and the second wiring layer and connected to the upper power pattern. The lower power pattern may be connected to the upper power pattern by one or more vias. The lower power pattern may including a plurality of rectangular lower power patches extending in the second direction, i.e. the plurality of rectangular lower patches may each have a length extending in the second direction.

In some embodiments, the integrated circuit further comprises a lower power pattern disposed in a third wiring layer disposed between the first wiring layer and the second wiring layer, connected to the upper power pattern, the lower power pattern including a plurality of rectangular lower power patches extending in the first direction, and configured to supply power to the power rail, wherein corner portions of the plurality of lower power patches overlap each in a direction between the first direction and the second direction. In some embodiments, the plurality of lower power patterns have an outline identical to an outline of the plurality of upper power patterns.

At least some of the above and other features of the invention are set out in the claims.

### BRIEF DESCRIPTION OF THE DRAWINGS

Embodiments of the inventive concept will be more clearly understood from the following detailed description taken in conjunction with the accompanying diagrams in which:
FIGS. 1A and 1B are diagrams showing electronic devices according to an embodiment, respectively;
FIG. 2 is a diagram illustrating a power delivery network circuit according to an embodiment;
FIG. 3 is a diagram illustrating a power delivery network impedance of an electronic device including a diagonal power pattern according to an embodiment;
FIG. 4 is a cross-sectional view illustrating a wiring layer according to an embodiment;
FIG. 5 is a diagram illustrating a diagonal power pattern and a power rail according to an embodiment;
FIG. 6 is a schematic view of a portion of a chip according to an embodiment;
FIGS. 7A to 7D are diagrams showing examples of devices according to embodiments;
FIG. 8 is a diagram illustrating an integrated circuit including a power pattern of a grid structure, according to a comparative example;
FIG. 9 is a diagram illustrating the integrated circuit including a diagonal power pattern, according to an embodiment;
FIG. 10 is a diagram illustrating a diagonal power pattern according to an embodiment;
FIG. 11 is a diagram illustrating the integrated circuit including a diagonal power pattern, according to an embodiment;
FIG. 12 is a diagram illustrating the integrated circuit including a diagonal power pattern, according to an embodiment;
FIG. 13 is a flowchart of a method of manufacturing an integrated circuit according to an embodiment;
FIG. 14 is a flowchart of a method of manufacturing an integrated circuit, according to an embodiment;
FIG. 15 is a block diagram showing a system-on-chip (SoC) according to an embodiment; and
FIG. 16 is a block diagram showing a computing system including a memory storing a program according to an embodiment.

### DETAILED DESCRIPTION

Embodiments of the inventive concept provide an integrated circuit (IC) with one or more diagonal power patterns for distributing power to components of the IC. The use of the diagonal power patterns may enhance power integrity, reduce voltage drops, and enable a layout of the IC to be more optimal. Power paths extend diagonally, rather than in traditional grid patterns, enabling shorter power delivery paths, minimizing resistance, and reducing voltage drops. The diagonal power patterns may be achieved through overlapping rectangular power patches, creating a continuous and robust network while maintaining efficient connectivity. The diagonal power patterns may be implemented across multiple wiring layers, interconnected with vias, enhancing the flexibility and efficiency of power delivery. Further, this design aligns with standard cell arrangements in integrated circuits, ensuring compatibility with typical semiconductor manufacturing processes.

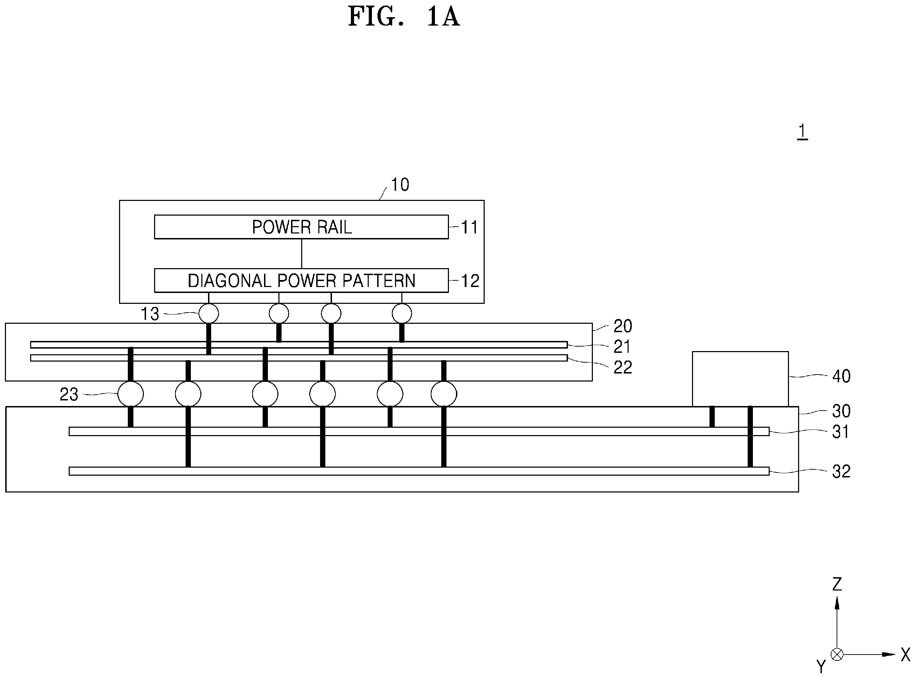

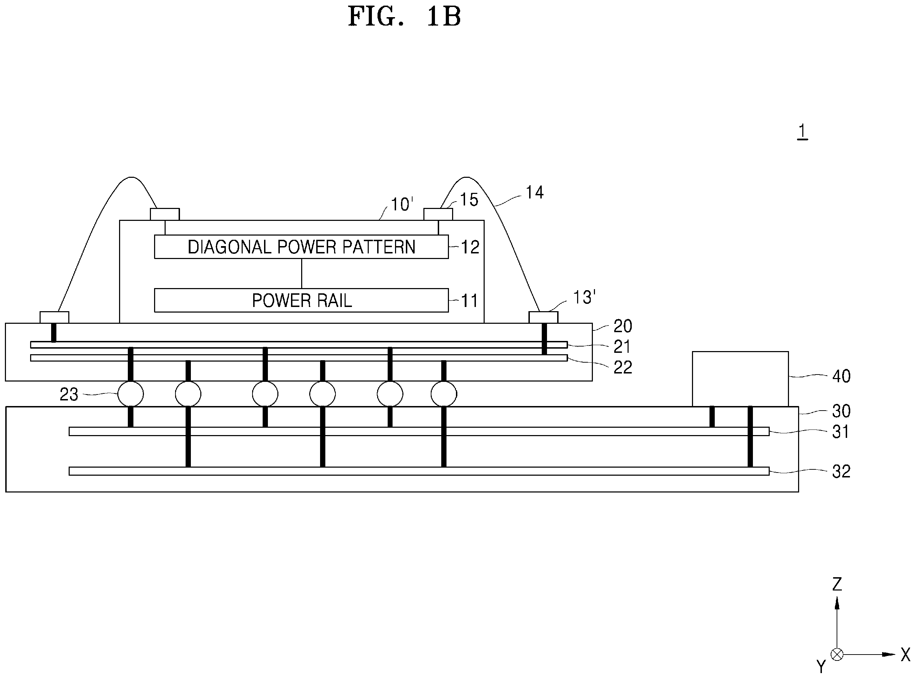

FIGS. 1A and 1B are diagrams showing electronic devices according to an embodiment, respectively.

Referring to FIG. 1A, an electronic device 1 may include a chip 10, a package substrate 20, a board 30 (e.g., a circuit board), and a power management integrated circuit (PMIC) 40. The package substrate 20 and the PMIC 40 may be mounted on a horizontal plane formed by the X-Y axes on the upper portion of the board 30. In this specification, the X-axis direction may be referred to as a first direction, the Y-axis direction may be referred to as a second direction, and the Z-axis direction may be referred to as a vertical direction.

In FIG. 1A, the chip 10 may be mounted vertically on the package substrate 20 by a flip chip bonding method. An active surface of the chip 10, which includes a power pad and a signal pad of the chip 10, may be mounted facing the package substrate 20. The power pad and signal pad of the chip 10 may be electrically connected to the package substrate 20 through solder bumps 13. The package substrate 20 and the PMIC 40 may be mounted on the board 30. The board 30 and the package substrate 20 may be electrically connected to each other through solder balls 23. The solder bumps 13 and the solder balls 23 may include a metal such as copper (Cu), aluminum (Al), tungsten (W), nickel (Ni), gold (Au), silver (Ag), titanium (Ti), tantalum (Ta), indium (In), molybdenum (Mo), manganese (Mn), cobalt (Co), tin (Sn), magnesium (Mg), rhenium (Re), beryllium (Be), gallium (Ga), ruthenium (Ru), or an alloy thereof

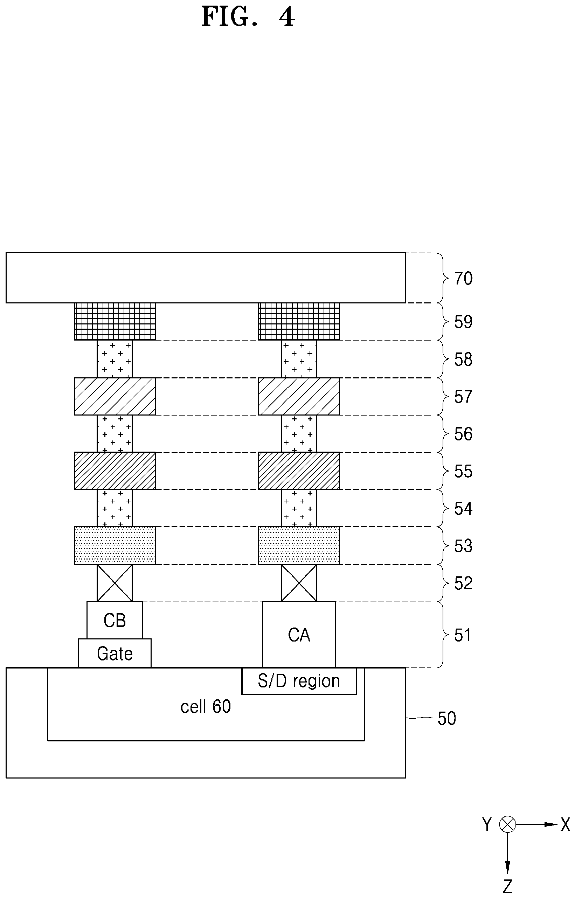

The PMIC 40 may include a plurality of voltage regulator modules (VRMs). A VRM may be a voltage converter that receives external input power (e.g., 12 V) and converts the input power into internal power (e.g., 1 V). In other words, the VRM may be a DC-DC converter. The VRM may be a linear regulator, a non-linear regulator, a switched-capacitor converter, a switched-inductor converter, or a buck converter. The PMIC 40 may generate a voltage (e.g., VDD or VSS) to be provided to standard cells (e.g., 60 of FIG. 4) arranged on the chip 10.

The board 30 may be a printed circuit board (PCB). The board 30 may be a multilayer circuit board having vias and various conductive materials therein. For example, the board 30 may include a power plane layer 31 providing a first power voltage such as a positive power voltage (e.g., VDD) and a power plane layer 32 providing a second power voltage different from the first power voltage such as a negative power voltage or a ground voltage (e.g., VSS). In an embodiment, the first and second power voltages are both positive but different from one another. In an embodiment, the first and second power voltages are both negative, but different from one another. In an embodiment, the first power voltage is either a negative or a positive voltage and the second power voltage is a ground voltage. The power plane layers 31 and 32 may be conductive material layers formed on a plane extending along the first direction (X-axis direction) and the second direction (Y-axis direction). The power plane layer 31 may receive a positive power voltage from the PMIC 40 and transmit the positive power voltage to the package substrate 20. The power plane layer 32 may receive a negative power voltage from the PMIC 40 and transmit the negative power voltage to the package substrate 20. The power plane layers 31 and 32 may be connected to power plane layers 21 and 22 included in the package substrate 20 via the solder balls 23.

The package substrate 20 may include the power plane layer 21 providing a positive power voltage (e.g., VDD) and the power plane layer 22 providing a negative power voltage (e.g., VSS). The power plane layer 21 may be connected to the power plane layer 31 of the board 30, and the power plane layer 22 may be connected to the power plane layer 32 of the board 30. In an embodiment, the power plane layers 21 and 22 are connected to a diagonal power pattern 12 formed on the chip 10 through solder bumps 13. Although FIG. 1A shows that the power plane layers 21 and 22 are connected to one diagonal power pattern 12, the power plane layers 21 and 22 may be connected to different power patterns 12.

In the structure of the chip 10 connected to the package substrate 20 by a flip-chip bonding method, a plurality of solder bumps providing signals may be formed at edges of the active surface of the chip 10. Therefore, the number of solder bumps 13 formed at the edges (or the peripheral area) of the active surface of the chip 10 to provide a power voltage may be relatively small, and thus insufficient power may be provided to standard cells within the chip 10.

The chip 10 may include a diagonal power pattern 12 and a straight power rail 11. In detail, the diagonal power pattern 12 may include wires formed in at least one direction between the first direction and the second direction. For example, the first and second directions may be perpendicular to one another and the wires may be arranged diagonally with respect to the first and second directions. The power rail 11 may include wires formed in the first direction or the second direction. According to an embodiment, the diagonal power pattern 12 provides a relatively short path from the peripheral area where the solder bumps 13 are formed to the center area where the standard cells are formed, and thus the voltage drop of the power voltage due to the diagonal power pattern 12 may be minimized.

According to an embodiment, diagonal power patterns 12 are formed on two or more different wiring layers. For example, the diagonal power patterns 12 may be formed on two wiring layers from among a plurality of wiring layers formed in the chip 10. According to an embodiment, the diagonal power pattern 12 is formed on at least one wiring layer disposed below a redistribution layer (e.g., 70 of FIG. 4). However, embodiments of the disclosure are not limited thereto. For example, the diagonal power pattern 12 may be formed in any wiring layer from among a plurality of wiring layers located in the chip 10.

The diagonal power pattern 12 may have an outline of a plurality of rectangular power patches that are aligned and partially overlap one another in at least one direction between the first direction and the second direction. For example, the diagonal power pattern 12 may consist of a series of rectangular regions (e.g., power patches) that are aligned along a diagonal direction, which lies between the first direction and the second direction. The power patches may partially overlap with one another in a manner that creates a smoother transition or higher density of coverage along the diagonal power pattern 12. According to the design rules, wires extending in the first direction may be formed on a first wiring layer. Therefore, the outline of the diagonal power pattern 12 may be identical to the outline of a plurality of rectangular power patches each having a first length in the first direction and a first width in the second direction and being aligned and overlapping one another in a diagonal direction. For example, the overall outline (outer boundary) of the diagonal power pattern 12 may match the combined outer boundary of these patches as they are arranged in a diagonal direction.

The diagonal power pattern 12 may provide a power voltage to the power rail 11 through wires formed in various wiring layers. The power rail 11 may be formed on a wiring layer closest to the standard cells. The power rail 11 may provide a power voltage to a standard cell by being connected to a source/drain area or a gate electrode of the standard cell through a conductive material such as a via.

In FIG. 1B, a chip 10' may be mounted in the vertical direction (Z-axis direction) on the package substrate 20 by a wire bonding method. In detail, a surface opposite the active surface of the chip 10', which has a power pad 15 and a signal pad may be mounted to face the package substrate 20. The power pad 15 of the chip 10' may be electrically connected to a pad 13' of the package substrate 20 through a bonding wire 14. The signal pad of the chip 10' may also be electrically connected to a pad of the package substrate 20 via a bonding wire.

In the structure of a chip 10' connected to the package substrate 20 by a wire bonding method, power pads 15 may be formed at edges (or peripheral area) of the active surface of the chip 10' to reduce voltage drops due to the bonding wire 14.

According to an embodiment, the diagonal power pattern 12 included in the chip 10' provides a relatively short path from the peripheral area where the power pads 15 are formed to the center area where the standard cells are formed, and thus a voltage drop of the power voltage due to the diagonal power pattern 12 may be minimized.

Hereinafter, descriptions will focus on the electrical connection between the chip 10 and the package substrate 20 using the flip chip bonding method of FIG. 1A, but embodiments are not limited thereto. Unless otherwise noted, the description with respect to the flip-chip bonding method may also be applied to the wire bonding method.

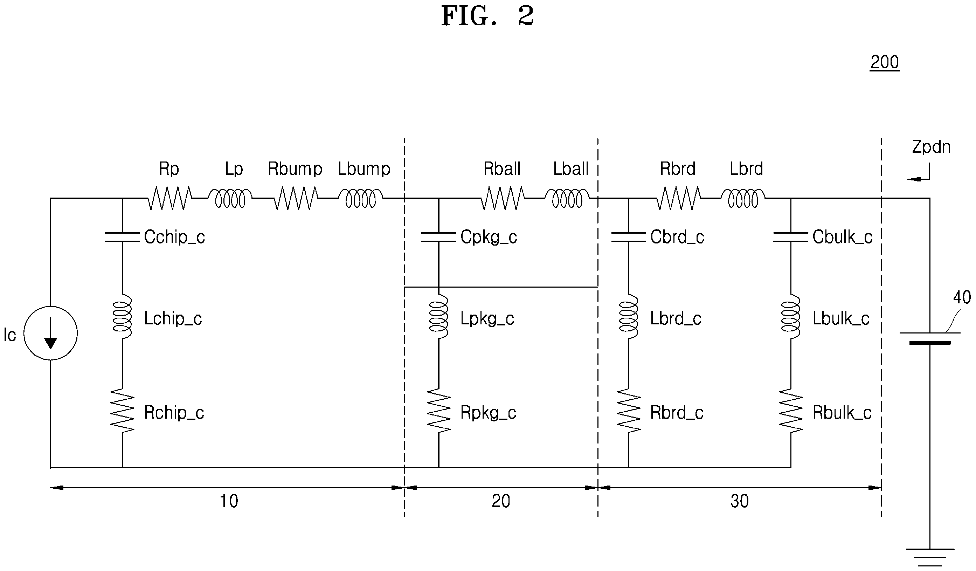

FIG. 2 is a diagram illustrating a power delivery network circuit according to an embodiment. Referring to FIG. 2, a power delivery network circuit 200 represents a path through which a voltage generated by the PMIC 40 is transmitted to the board 30, the package substrate 20, and the chip 10.

In the power delivery network circuit 200, the PMIC 40 may be represented as a voltage source.

In the power delivery network circuit 200, a circuit corresponding to the board 30 may include capacitors Cbulk_c and Cbrd_c, inductors Lbulk_c, Lbrd, and Lbrd_c, and resistors Rbulk_c, Rbrd, and Rbrd_c. The capacitor Cbulk_c, the inductor Lbulk_c, and the resistor Rbulk_c may represent a bulk capacitor disposed near the PMIC 40 on the board 30. The resistor Rbrd and the inductor Lbrd may represent a wire interconnecting the PMIC 40 and the package substrate 20. The capacitor Cbrd_c, the inductor Lbrd_c, and the resistor Rbrd_c may represent a capacitor disposed near the package substrate 20 on the board 30.

In the power delivery network circuit 200, a circuit corresponding to the package substrate 20 may include a capacitor Cpkg_c, inductors Lball and Lpkg_c, and resistors Rball and Rpkg_c. The resistor Rball and the inductor Lball may represent a wire and a solder ball (23 of FIGS. 1A and 1B) interconnecting the package substrate 20 and the chip 10. The capacitor Cpkg_c, the inductor Lpkg_c, and the resistor Rpkg_c may represent a capacitor formed on the package substrate 20.

A circuit corresponding to the chip 10 in the power delivery network circuit 200 may include a capacitor Cchip_c, inductors Lbump, Lchip_c, and Lp, resistors Rbump, Rchip_c, and Rp, and a current source Ic. The resistor Rbump and the inductor Lbump may represent a solder bump (13 of FIG. 1A). The capacitor chip_c, the inductor Lchip_c, and the resistor Rchip_c may represent a capacitor formed within the chip 10. The current source Ic may represent a plurality of standard cells included in the chip 10. The resistor Rp and the inductor Lp may represent a power path from the solder bump (13 of FIG. 1A) to a standard cell.

The impedance in the direction from the PMIC 40 to the board 30 may be a power delivery network impedance Zpdn. Since the voltage of the PMIC 40 needs to be normally transmitted to the chip 10, the power delivery network circuit 200 may be designed based on the power delivery network impedance Zpdn. The chip 10 according to an embodiment may reduce the impedance due to the resistor Rp and the inductor Lp by including the diagonal power pattern 12.

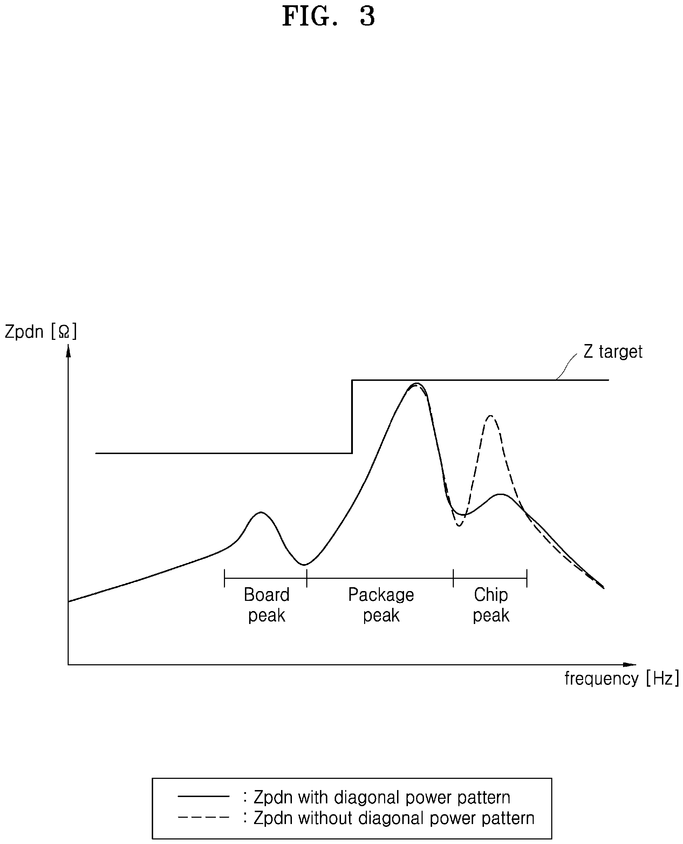

FIG. 3 is a diagram illustrating a power delivery network impedance of an electronic device including a diagonal power pattern according to an embodiment.

Referring to FIG. 3, to provide a stable voltage to the chip 10, the power delivery network impedance Zpdn may be set to be lower than a target impedance Ztarget. The magnitude of the power delivery network impedance Zpdn may vary according to the frequencies of electrical signals.

The power delivery network impedance Zpdn may be determined by a capacitor, an inductor, and a resistor of the power delivery network circuit 200. In the low frequency range, the peak of the power delivery network impedance Zpdn may be determined by an inductor, a capacitor, and a resistor located on the board 30. In the intermediate frequency range, the peak of the power delivery network impedance Zpdn may be determined by an inductor, a capacitor, and a resistor located on the package substrate 20. In the high frequency range, the peak of the power delivery network impedance Zpdn may be determined by an inductor, a capacitor, and a resistor located on the chip 10.

As shown in FIG. 1A, when the chip 10 includes the diagonal power pattern 12, the power delivery network impedance Zpdn may be lowered in the high frequency range. In other words, according to an embodiment, the power delivery network impedance Zpdn may be lowered by the diagonal power pattern 12 included in the chip 10, and thus the power integrity may be increased.

FIG. 4 is a cross-sectional view illustrating a wiring layer according to an embodiment.

Referring to FIG. 4, a plurality of wiring layers 51 to 59 and 70 may be formed on a substrate 50. A standard cell 60 may be formed in the substrate 50. FIG. 4 is a cross-sectional view illustrating a plurality of wiring layers 51, 52, 53, 54, 55, 56, 57, 58, 59 and 70 (e.g., first through tenth wiring layers) formed on the standard cell 60 and may differ from the actual cross-sectional view of the chip 10.

The first wiring layer 51 may be referred to as a contact layer. A gate contact CB connected to a gate electrode of a transistor and a source/drain contact CA connected to a source/drain area S/D area of the transistor may be formed in the contact layer. The first wiring layer 51 may also be referred to as an M0 layer.

The second wiring layer 52 may be referred to as a contact via layer and may also be referred to as a V0 layer. The third wiring layer 53 may be referred to as an M1 layer. The fourth wiring layer 54 may be referred to as a first via layer V1. The fifth wiring layer 55 may be referred to as an M2 layer. The sixth wiring layer 56 may be referred to as a second via layer V2. The seventh wiring layer 57 may be referred to as a third wiring layer M3. The eighth wiring layer 58 may be referred to as a third via layer V3. The ninth wiring layer 59 may be referred to as a fourth wiring layer M4. The tenth wiring layer 70 connected to the solder bumps 13 may be formed over or on the ninth wiring layer 59. The tenth wiring layer 70 may be referred to as a redistribution layer. The wiring layers may be metal patterns. The width of a metal pattern formed, the spacing between patterns, the spacing between the center lines of the patterns, the area of a pattern, the height of the pattern, etc. may differ from one wiring layer to another. Although FIG. 4 shows only 10 wiring layers, the number of wiring layers is not limited thereto.

In the drawings below, only some wiring layers may be shown for convenience of illustration, and, to indicate connections between a pattern of an upper wiring layer and a pattern of a lower wiring layer, vias may be shown even though they are located under the pattern of the upper wiring layer.

For convenience of explanation, in some drawings below, it may be described that the diagonal power pattern 12 of FIG. 1A is formed on the eighth wiring layer 58 and the ninth wiring layer 59, but embodiments are not limited thereto. In other words, the diagonal power pattern 12 may be formed in other wiring layers. Also, for convenience of explanation, in some drawings below, it may be described that the power rail 11 of FIG. 1A is formed in the third wiring layer 53, but embodiments are not limited thereto. In other words, the power rail 11 may be formed in other wiring layers.

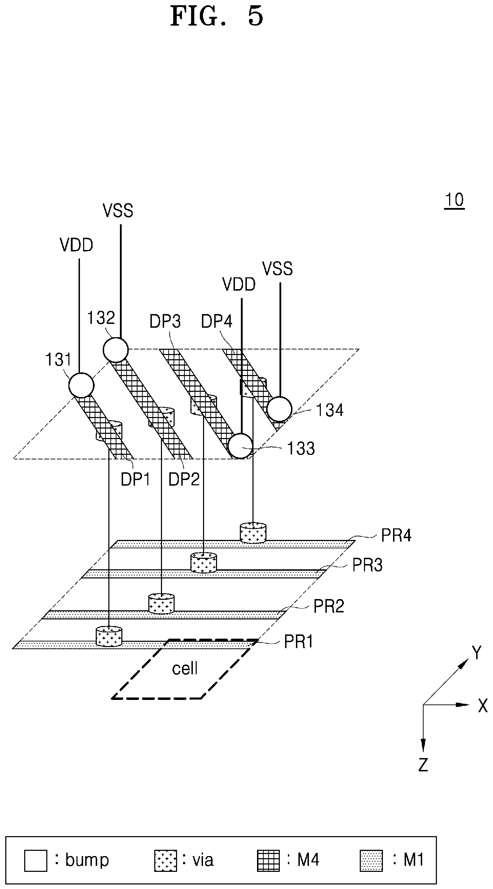

FIG. 5 is a diagram illustrating a diagonal power pattern and a power rail according to an embodiment.

Referring to FIG. 5, the chip 10 may include a standard cell, first to fourth power rails PR1 to PR4, first to fourth diagonal power patterns DP1 to DP4, and first to fourth solder bumps 131 to 134.

The standard cell is a unit of a layout included in an integrated circuit and may be simply referred to as a cell. The cell may include a transistor and be designed to perform a pre-defined function. In FIG. 5, only one cell is shown, but the number of cells is not limited thereto.

A first solder bump 131 and a third solder bump 133 may receive a positive power voltage VDD from the package substrate 20. A second solder bump 132 and a fourth solder bump 134 may receive a negative power voltage VSS from the package substrate 20.

The first solder bump 131 and the third solder bump 133 may provide the positive power voltage VDD to a first diagonal power pattern DP1 and a third diagonal power pattern DP3, respectively. The second solder bump 132 and the fourth solder bump 134 may provide the negative power voltage VSS to the second diagonal power pattern DP2 and a fourth diagonal power pattern DP4, respectively. A redistribution layer may be formed between the first solder bump 131 and the third solder bump 133 and the first diagonal power pattern DP1 and the third diagonal power pattern DP3, as described above with reference to FIG. 4.

The first diagonal power pattern DP1 and the third diagonal power pattern DP3 may provide the positive power voltage VDD to a first power rail PR1 and a third power rail PR3 through various wires including vias, respectively. The second diagonal power pattern DP2 and the fourth diagonal power pattern DP4 may provide the negative power voltage VSS to a second power rail PR2 and a fourth power rail PR4 through various wires including vias, respectively.

The first power rail PR1 or the third power rail PR3 may provide the positive power voltage VDD to the cell, and the second power rail PR2 or the fourth power rail PR4 may provide the negative power voltage VSS to the cell.

The first to fourth diagonal power patterns DP1 to DP4 may have outlines extending in a third direction between the first direction and the second direction. For example, at least one edge or boundary of the first to fourth diagonal power patterns DP1 to DP4 extend in the third direction. Therefore, the first to fourth diagonal power patterns DP1 to DP4 may provide short power transmission paths from the first to fourth solder bumps 131 to 134 to the cell, thereby reducing voltage drop and increasing power integrity.

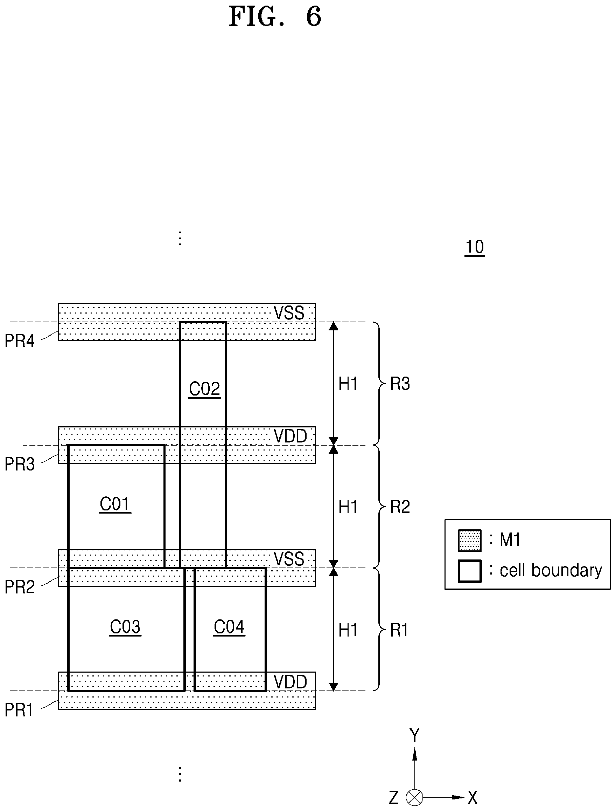

FIG. 6 is a schematic view of a portion of a chip according to an embodiment.

Referring to FIG. 6, the chip 10 may include a plurality of various cells C01 to C04, and the cells C01 to C04 may be arranged and aligned along a plurality of rows R1 to R3 extending in the first direction. One of the cells C01 to C04 may correspond to the cell of FIG. 5.

Although FIG. 6 shows that the height of the plurality of rows R1 to R3 is H1, embodiments are not limited thereto. For example, the heights of the plurality of rows R1 to R3 may be different from one another in other embodiments. Cells arranged in a single row like cells C01, C03, and C04 of FIG. 6 may be referred to as single height cells, whereas, a cell continuously disposed across two or more rows adjacent to one another like a cell C02 of FIG. 6 may be referred to as a multiple height cell.

The first to fourth power rails PR1 to PR4 extending in the first direction may be arranged on boundaries of the plurality of rows R1 to R3. The first power rail PR1 may provide the positive power voltage VDD to cells C03 and C04. The second power rail PR2 may provide the negative power voltage VSS to cells C01, C02, C03, and C04. The third power rail PR3 may provide the positive power voltage VDD to cells C01 and C02. The fourth power rail PR4 may provide the negative power voltage VSS to the cell C02. For example, the first power rail PR1 may be arranged on a boundary of the first row R1, the second power rail PR2 may be arranged on boundaries of the first and second rows R1 and R2, the third power rail PR3 may be arranged on boundaries of the second and third rows R2 and R3 and the fourth power rail PR2 may be arranged on a boundary of the fourth row R4.

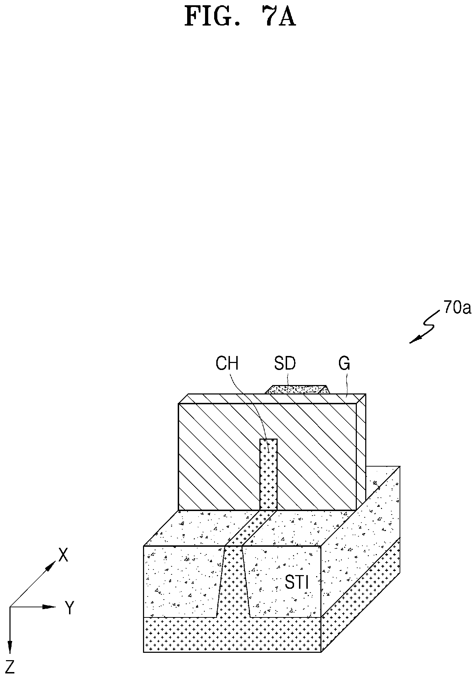

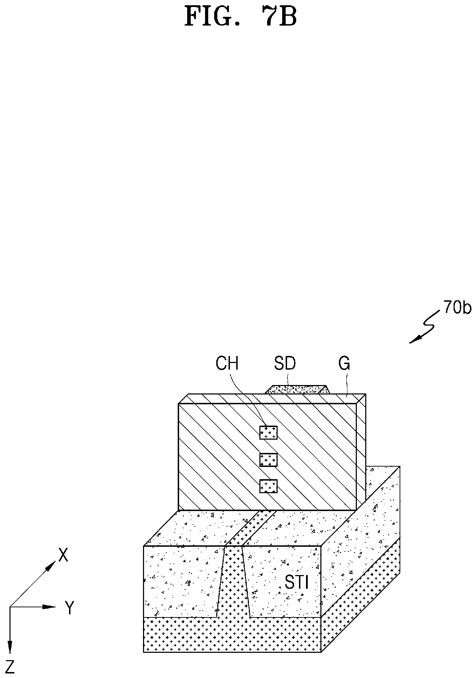

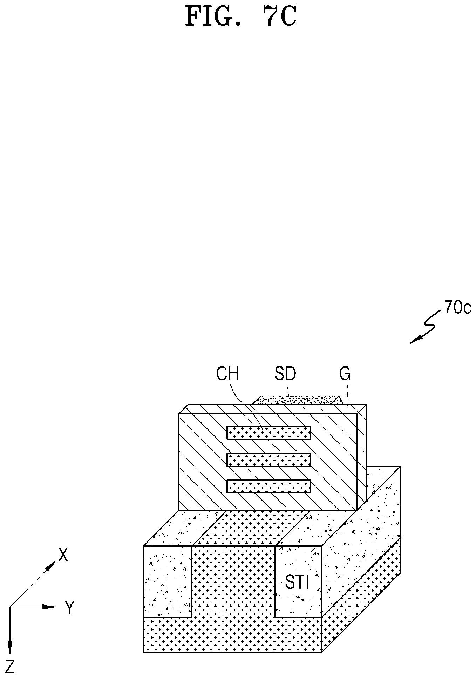

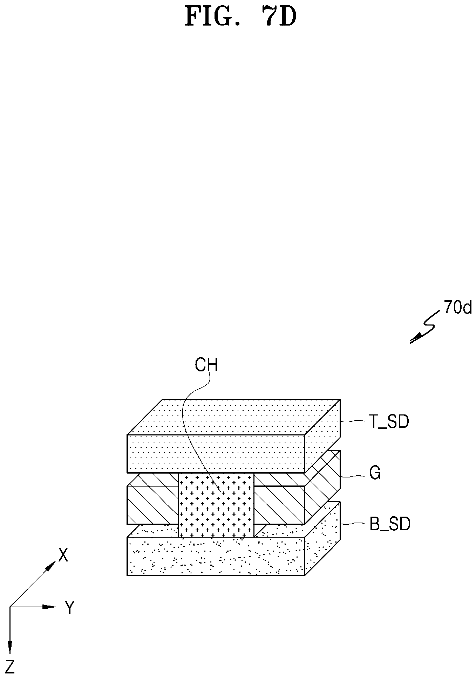

FIGS. 7A to 7D are diagrams showing examples of devices according to embodiments. For example, FIG. 7A shows a FinFET 70a, FIG. 7B shows a gate-all-around field effect transistor (GAAFET) 70b, FIG. 7C shows a multi-bridge channel field effect transistor (MBCFET) 70c, and FIG. 7D shows a vertical field effect transistor (VFET) 70d. The devices of FIGS. 7A to 7D may be included in a standard cell. For convenience of illustration, FIGS. 7A to 7C show structures in which one of two source/drain areas is removed, and FIG. 7D shows a cross-section of the VFET 70d cut along a plane parallel to a plane consisting of the Y axis and the Z axis and passing through a channel CH of the VFET 70d.

Referring to FIG. 7A, the FinFET 70a may be formed by a fin-type active pattern extending in the first direction between shallow trench isolations (STIs) and a gate electrode G extending in the second direction. A source/drain area SD may be formed on both sides of the gate electrode G, and thus a source and a drain may be spaced apart from each other in the first direction. An insulation layer may be formed between the channel CH and the gate electrode G. According to some embodiments, the FinFET 70a may be formed by a plurality of active patterns spaced apart from each other in the second direction and the gate electrode G.

Referring to FIG. 7B, the GAAFET 70b may be formed by active patterns (i.e., nanowires) extending in the first direction and spaced apart from each other in the vertical direction and the gate electrode G extending in the second direction. The source/drain area SD may be formed on both sides of the gate electrode G, and thus a source and a drain may be spaced apart from each other in the first direction. An insulation layer may be formed between the channel CH and the gate electrode G. The number of nanowires included in the GAAFET 70b is not limited to that shown in FIG. 7B.

Referring to FIG. 7C, the MBCFET 70c may be formed by active patterns (i.e., nano-sheets) extending in the first direction and spaced apart from each other in the vertical direction and the gate electrode G extending in the second direction. The source/drain area SD may be formed on both sides of the gate electrode G, and thus a source and a drain may be spaced apart from each other in the second direction. An insulation layer may be formed between the channel CH and the gate electrode G. The number of nano-sheets included in the MBCFET 70c is not limited to that shown in FIG. 7C.

Referring to FIG. 7D, the VFET 70d may include a top source/drain T_SD and a bottom source/drain B_SD spaced apart from each other in the vertical direction with the channel CH therebetween. The VFET 70d may include the gate electrode G surrounding a circumference of the channel CH between the top source/drain T_SD and the bottom source/drain B_SD. An insulation layer may be formed between the channel CH and the gate electrode G.

Devices included in the chip 10 are not limited to the examples of FIGS. 7A to 7D. For example, the chip 10 may include a ForkFET in which nano-sheets for a P-type transistor and nano-sheets for an N-type transistor are separated from each other by a dielectric wall, and thus an N-type transistor and a P-type transistor have structures closer to each other. Also, the chip 10 may include a bipolar junction transistor as well as a FET such as a complementary FET (CFET), a negative CFET (NCFET), a carbon nanotube (CNT) FET, etc.

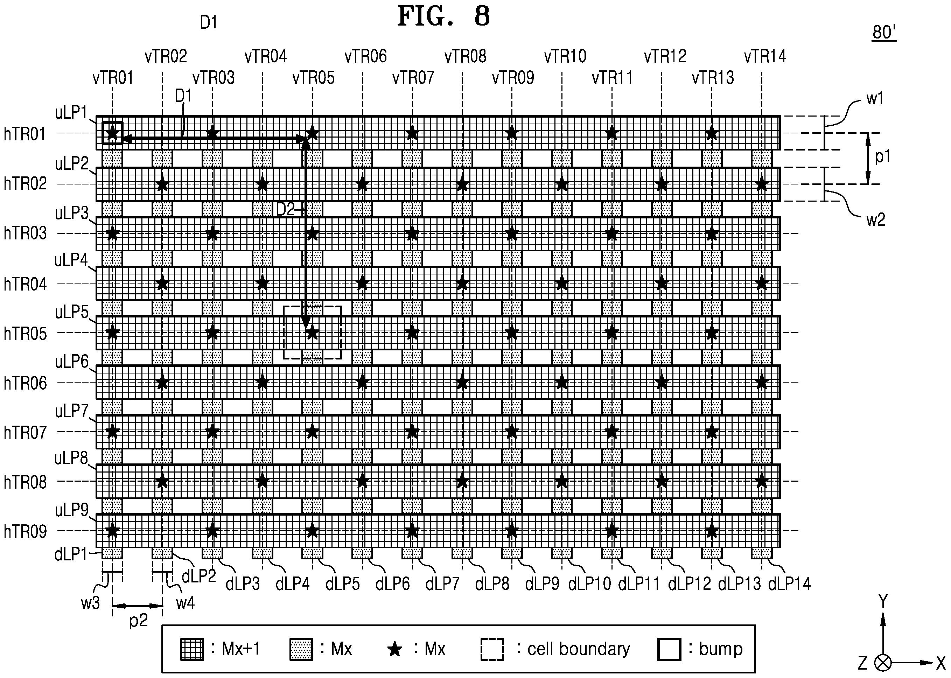

FIG. 8 is a diagram illustrating an integrated circuit including a power pattern of a grid structure, according to a comparative example.

Referring to FIG. 8, an integrated circuit 80' may include power patterns formed on an Mx+1 layer and an Mx layer. The Mx layer may refer to an arbitrary wiring layer on which a pattern is formed, and the Mx+1 layer may refer to a wiring layer disposed over or on the Mx layer and having a pattern formed thereon. For example, the Mx layer and the Mx+1 layer may be wiring layers arranged under a redistribution layer. A via layer may be formed between the Mx+1 layer and the Mx layer, containing vias that interconnect the pattern of the Mx layer with the pattern of the Mx+1 layer. A plurality of upper power patterns uLP1 to uLP9 may extend in the first direction along a plurality of tracks hTR01 to hTR09 in the Mx+1 layer of the integrated circuit 80', respectively. The plurality of tracks hTR01 to hTR09 may be center lines passing through the centers of the plurality of upper power patterns uLP1 to uLP9, respectively. The plurality of upper power patterns uLP1 to uLP9 may have a straight line shape extending in the first direction. A plurality of upper power patterns uLP1, uLP3, uLP5, uLP7, and uLP9 may provide the positive power voltage VDD. A plurality of upper power patterns uLP2, uLP4, uLP6, and uLP8 may provide the negative power voltage VSS. In other words, upper power patterns providing the positive power voltage VDD and upper power patterns providing the negative power voltage VSS may be arranged alternately in the first direction. In other words, the ratio of the number of upper power patterns providing the positive power voltage VDD to the number of upper power patterns providing the negative power voltage VSS may be 1:1. However, embodiments are not limited thereto, and the ratio of the number of upper power patterns providing the positive power voltage VDD to the number of upper power patterns providing the negative power voltage VSS may vary, e.g., 2:1, 1:2, 3:1, 1:3, etc.

In the Mx+1 layer, wires extending in the first direction along the plurality of tracks hTR01 to hTR09 are formed, and the length of the wires in the second direction may be referred to as a width. The spacing between the plurality of tracks hTR01 to hTR09 may be p1. The spacing p1 may be referred to as the pitch of the Mx+1 layer. The spacing p1 may be greater than half the sum of the widths of two upper power patterns adjacent to each other from among the plurality of upper power patterns uLP1 to uLP9. For example, the width of an upper power pattern uLP1 is w1, the width of an upper power pattern uLP2 is w2, and the spacing p1 may be greater than (w1+w2)/2. Alternatively, the spacing p1 may be greater than the sum of the widths in the -Y-axis direction from the center line of the upper power pattern uLP1 (e.g., a track hTR01) and the widths in the +Y-axis direction from the center line of the upper power pattern uLP2 (e.g., a track hTR02). Therefore, upper power patterns extending along adjacent tracks are not connected to each other at the Mx+1 layer.

A plurality of lower power patterns dLP1 to dLP14 may extend in the second direction along a plurality of tracks vTR01 to vTR14 in the Mx layer of the integrated circuit 80'. The plurality of tracks vTR01 to vTR14 may also be referred to as center lines passing through the centers of the plurality of lower power patterns dLP1 to dLP14, respectively. The plurality of lower power patterns dLP1 to dLP14 may have a straight line shape extending in the second direction. A plurality of lower power patterns dLP1, dLP3, dLP5, dLP7, dLP9, dLP11, and dLP13 may provide the positive power voltage VDD. A plurality of lower power patterns dLP2, dLP4, dLP6, dLP8, dLP10, dLP12, and dLP14 may provide the negative power voltage VSS.

In the Mx layer, wires extending in the second direction along the plurality of tracks vTR01 to vTR14 are formed, and the length of the wires in the first direction may be referred to as a width. The spacing between the plurality of tracks vTR01 to vTR14 may be p2. The spacing p2 may be referred to as the pitch of the Mx layer. The spacing p2 may be greater than half the sum of the widths of two lower power patterns adjacent to each other from among the plurality of lower power patterns dLP1 to dLP14. For example, the width of a lower power pattern dLP1 is w3, the width of an upper power pattern dLP2 is w4, and the spacing p2 may be greater than (w3+w4)/2. Alternatively, the spacing p2 may be greater than the sum of the widths in the +X-axis direction from the center line of the lower power pattern dLP1 (e.g., a track vTR01) and the widths in the -X-axis direction from the center line of the lower power pattern dLP2 (e.g., a track vTR02). Therefore, lower power patterns extending along adjacent tracks are not connected to each other at the Mx layer.

The upper power patterns uLP1 to uLP9 and the lower power patterns dLP1 to dLP14 may be electrically connected through vias in the via layer positioned between the Mx layer and the Mx+1 layer, thereby forming a multilayer power pattern with a grid structure. Vias may be formed at positions where upper power patterns and lower power patterns providing the same power voltage overlap in the vertical direction. For example, vias may be formed at locations where the plurality of upper power patterns uLP1, uLP3, uLP5, uLP7, and uLP9 providing the positive power voltage VDD and the plurality of lower power patterns dLP1, dLP3, dLP5, dLP7, dLP9, dLP11, and dLP13 providing the positive power voltage VDD overlap. Vias may be formed at locations where the plurality of upper power patterns uLP2, uLP4, uLP6, and uLP8 providing the negative power voltage VSS and the plurality of lower power patterns dLP2, dLP4, dLP6, dLP8, dLP10, dLP12, and dLP14 providing the negative power voltage VSS overlap.

As shown in FIG. 8, a cell indicated by a cell boundary may be formed below a first intersection area between an upper power pattern uLP5 and a lower power pattern dLP5. When a solder bump is formed over a second intersection area between the upper power pattern uLP1 and the lower power pattern dLP1, the length of a power transmission path between the first intersection area and the second intersection area may be D1+D2. Due to the power pattern having a grid structure, the degree of freedom of a power transmission path may be reduced, because power transmission paths are limited to the first direction, the second direction, and the vertical direction.

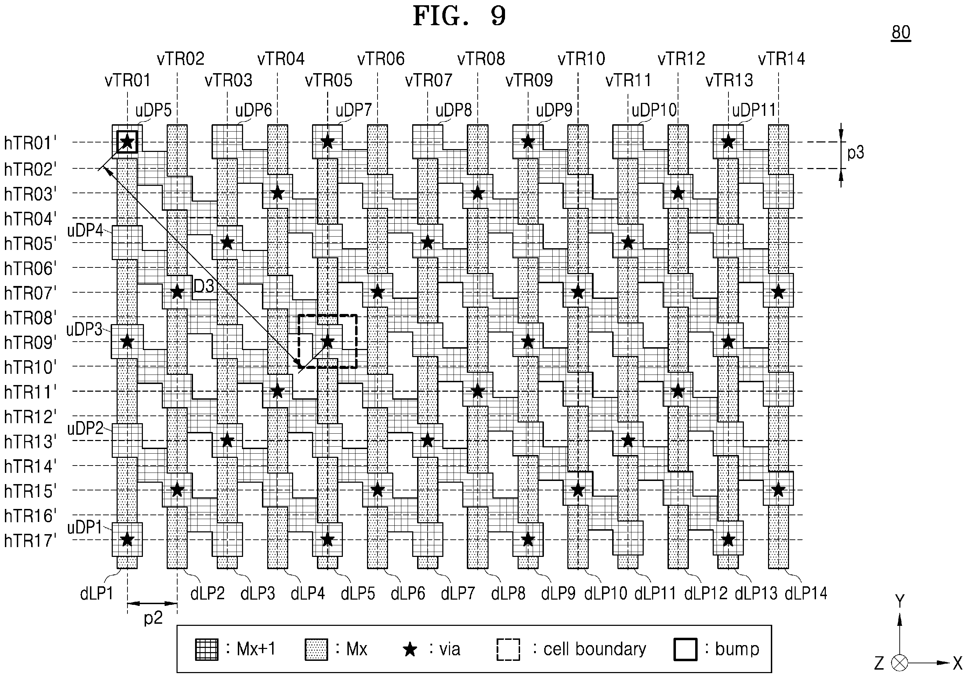

FIG. 9 is a diagram illustrating an integrated circuit 80 including a diagonal power pattern, according to an embodiment. The integrated circuit 80 may correspond to the internal circuit of the chip 10.

Referring to FIG. 9, a plurality of upper power patterns uDP1 to uDP11 may have an outline extending in a diagonal direction between the first direction and the second direction along a plurality of tracks hTR01' to hTR17' in the Mx+1 layer of the integrated circuit 80. In other words, the plurality of upper power patterns uDP1 to uDP11 may be referred to as diagonal power patterns. The integrated circuit 80 may correspond to the chip 10 of FIG. 1A or FIG. 1B. A plurality of upper power patterns uDP1, uDP3, uDP5, uDP7, uDP9, and uDP11 may provide the positive power voltage VDD. A plurality of upper power patterns uDP2, uDP4, uDP6, uDP8, and uDP10 may provide the negative power voltage VSS. In other words, upper power patterns providing the positive power voltage VDD and upper power patterns providing the negative power voltage VSS may be arranged alternately. The ratio of the number of upper power patterns providing the positive power voltage VDD to the number of upper power patterns providing the negative power voltage VSS may be 1:1. However, embodiments are not limited thereto, and the ratio of the number of upper power patterns providing the positive power voltage VDD to the number of upper power patterns providing the negative power voltage VSS may vary, e.g., 2:1, 1:2, 3:1, 1:3, etc.

Referring to FIG. 9, the plurality of upper power patterns uDP1 to uDP11 may each have an outline identical to an outline formed by a plurality of rectangular power patches that overlap each other and are aligned in a direction between the first direction and the second direction. The plurality of power patches may have the same width and the same length, but embodiments are not limited thereto.

The plurality of rectangular power patches may each have a length extending in the first direction along one of the plurality of tracks hTR01' to hTR17'. In other words, the plurality of tracks hTR01' to hTR17' may be center lines passing through the centers of the plurality rectangular power patches, respectively.

The spacing between plurality of tracks hTR01' to hTR17' may be p3. The spacing p3 may be referred to as the pitch of the Mx+1 layer. The spacing p3 may be smaller than half the sum of the widths of two power patches adjacent to each other and included in one upper power pattern. Therefore, power patches extending along adjacent tracks may be connected to each other at the Mx+1 layer. Therefore, the plurality of upper power patterns uDP1 to uDP11 may each have an outline extending in a direction between the first direction and the second direction.

As described above with reference to FIG. 8, the plurality of lower power patterns dLP1 to dLP14 may extend in the second direction along the plurality of tracks vTR01 to vTR14 in the Mx layer of the integrated circuit 80.

The upper power patterns uDP1 to uDP11 and the lower power patterns dLP1 to dLP14 may be electrically connected by vias in the via layer formed between the Mx layer and the Mx+1 layer, thereby forming a multilayer power pattern. Vias may be formed at positions where upper power patterns and lower power patterns providing the same power voltage overlap in the vertical direction. For example, vias may be formed at locations where the plurality of upper power patterns uDP1, uDP3, uDP5, uDP7, uDP9, and uDP11 providing the positive power voltage VDD and the plurality of lower power patterns dLP1, dLP3, dLP5, dLP7, dLP9, dLP11, and dLP13 providing the positive power voltage VDD overlap. Vias may be formed at locations where the plurality of upper power patterns uDP2, uDP4, uDP6, uDP8, and uDP10 providing the negative power voltage VSS and the plurality of lower power patterns dLP2, dLP4, dLP6, dLP8, dLP10, dLP12, and dLP14 providing the negative power voltage VSS overlap.

As shown in FIG. 9, a cell indicated by a cell boundary may be formed below a first intersection area between an upper power pattern uDP5 and the lower power pattern dLP5. When a solder bump is formed over a second intersection area between the upper power pattern uDP5 and the lower power pattern dLP1, the length of a power transmission path between the first intersection area and the second intersection area may be D3. The diagonal power pattern increases the flexibility of extending the power transmission path by allowing it to expand not only in the first, second and vertical directions, but also in directions between the first direction and the second direction, thereby enhancing the degree of freedom of the power transmission. Furthermore, as compared to the comparative example of FIG. 8, since D3 is the square root of D1²+D2², the power transmission path may be shortened. Therefore, voltage drops may be reduced and power integrity may be enhanced.

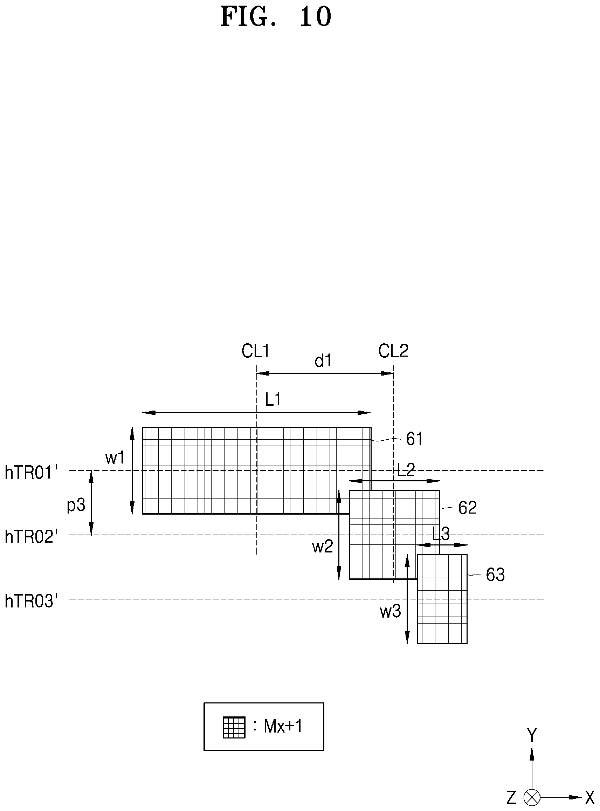

FIG. 10 is a diagram illustrating a diagonal power pattern according to an embodiment.

Referring to FIG. 10, first to third power patches 61 to 63 having a rectangular shape may extend in the first direction along tracks hTR01' to hTR03' having the spacing p3. The tracks hTR01' to hTR03' may be imaginary center lines passing through the center points of the first to third power patches 61 to 63 in the first direction, respectively. The first to third power patches 61 to 63 having a rectangular shape may be included in one of the upper power patterns uDP1 to uDP11 of FIG. 9. The width of the first power patch 61 is w1 and the length of the first power patch 61 is L1. The width of the second power patch 62 is w2 and the length of the second power patch 62 is L2. The width of a third power patch 63 is w3 and the length of the third power patch 63 is L3.

In an embodiment, the widths w1, w2, and w3 are identical to one another. However, embodiments are not limited thereto, and at least two of the widths w1, w2, and w3 may be different from each other.

In an embodiment the lengths L1, L2, and L3 are identical to one another. However, embodiments are not limited thereto, and at least two of the lengths L1, L2, and L3 may be different from each other.

The spacing p3 may be smaller than half the sum of the widths of two power patches adjacent to each other. For example, the spacing p3 may be smaller than (w1+w2)/2. Therefore, the first power patch 61 and the second power patch 62 may partially overlap each other. In an embodiment, the corner portion of the first power patch 61 and the corner portion of the second power patch 62 partially overlap each other.

The spacing between center lines passing through the center points of two power patches adjacent to each other from among the first to third power patches 61 to 63 in the second direction may be smaller than half the sum of the lengths of the power patches adjacent to each other. For example, a distance d1 between a center line CL1 passing through the center point of the first power patch 61 in the second direction and a center line CL2 passing through the center point of the second power patch 62 in the second direction may be smaller than half the sum of a length L1 of the first power patch 61 and a length L2 of the second power patch 62. Alternatively, the distance d1 may be smaller than the sum of the length in the +X direction from the center line CL1 of the first power patch 61 and the length in the -X direction from the center line CL2 of the second power patch 62. Therefore, the first power patch 61 and the second power patch 62 may partially overlap each other.

Referring to FIG. 10, when an upper power pattern includes the first to third power patches 61 to 63, the outline of the upper power pattern may be a polygon having 4*3=12 sides. In other words, when the upper power pattern includes N power patches, the outline of the upper power pattern may be a polygon having 4*N sides. For example, in FIG. 9, an upper power pattern uDP2 includes five power patches, and the outline of the upper power pattern uDP2 may be a polygon having 4*5=20 sides.

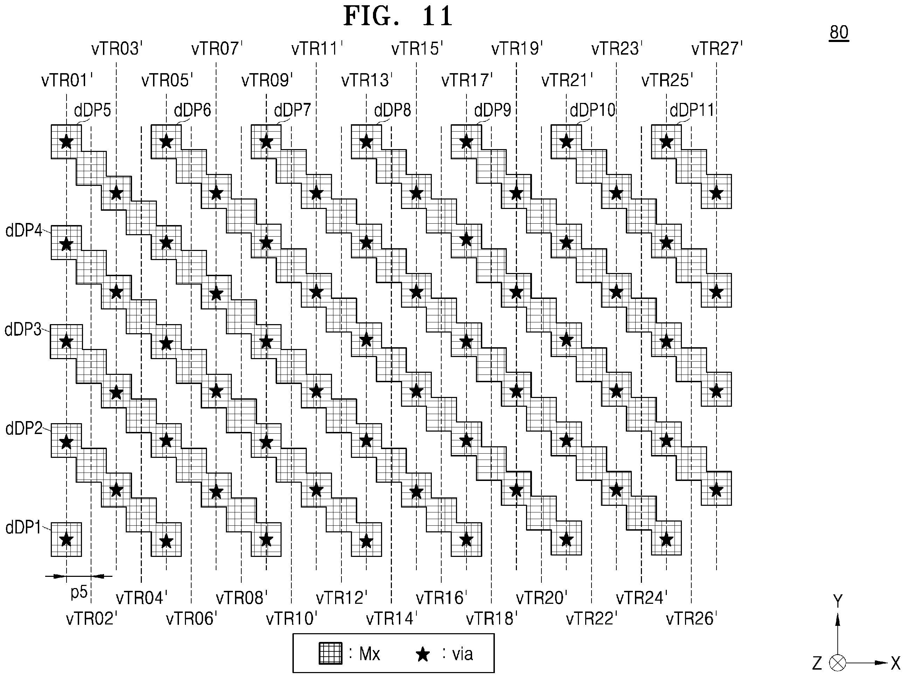

FIG. 11 is a diagram illustrating an integrated circuit including a diagonal power pattern, according to an embodiment.

Referring to FIG. 11, unlike the lower power patterns dLP1 to dLP14 of FIG. 9, lower power patterns dDP1 to dDP11 in the Mx layer of the integrated circuit 80 each have an outline extending in a diagonal direction between the first direction and the second direction along a plurality of tracks vTR01' to vTR27'. In other words, the lower power patterns dDP1 to dDP11 may be referred to as diagonal power patterns. A plurality of lower power patterns dDP1, dDP3, dDP5, dDP7, dDP9, and dDP11 may provide the positive power voltage VDD. A plurality of lower power patterns dDP2, dDP4, dDP6, dDP8, and dDP10 may provide the negative power voltage VSS. In other words, lower power patterns providing the positive power voltage VDD and lower power patterns providing the negative power voltage VSS may be arranged alternately. For example, the lower power patterns providing the positive power voltage VDD may alternate with the lower power patterns providing the negative power voltage VSS. The ratio of the number of lower power patterns providing the positive power voltage VDD to the number of lower power patterns providing the negative power voltage VSS may be 1:1. However, embodiments are not limited thereto, and the ratio of the number of lower power patterns providing the positive power voltage VDD to the number of lower power patterns providing the negative power voltage VSS may vary, e.g., 2:1, 1:2, 3:1, 1:3, etc.

Referring to FIG. 11, the plurality of lower power patterns dDP1 to dDP11 may each have an outline identical to an outline formed by a plurality of rectangular power patches that overlap each other and are aligned in a direction between the first direction and the second direction. For example, the plurality of lower power patterns dDP1 to dDP11 may each have a shape identical to the shape formed by a series of overlapping rectangular power patches aligned in a direction between the first and second directions. The plurality of power patches may have the same width and the same length, but embodiments are not limited thereto. The descriptions given above with reference to FIG. 10 may be applied to the plurality of power patches. In FIG. 10, the first to third power patches 61 to 63 extend in the first direction along the tracks hTR01' to hTR03' and the length of the first to third power patches 61 to 63 in the second direction is referred to as the width. However, in FIG. 11, power patches included in the plurality of lower power patterns dDP1 to dDP11 extend in the second direction along the tracks vTR01' to vTR27', and the length of the power patches in the first direction may be referred to as the width.

The spacing between plurality of tracks vTR01' to vTR27' may be p5. The spacing p5 may be referred to as the pitch of the Mx layer. The spacing p5 may be smaller than half the sum of the widths of two power patches adjacent to each other and included in one lower power pattern. Therefore, power patches extending along adjacent tracks may be connected to each other at the Mx layer. Therefore, the plurality of lower power patterns dDP1 to dDP11 may each have an outline extending in a direction between the first direction and the second direction.

Referring to FIGS. 9 and 11, the upper power patterns uDP1 to uDP11 and the lower power patterns dDP1 to dDP11 may be electrically connected to each other by vias of a via layer formed between the Mx layer and the Mx+1 layer, thereby forming a multilayer power pattern. As shown in FIGS. 9 and 11, the outline of the upper power patterns uDP1 to uDP11 may be identical to the outlines of the lower power patterns dDP1 to dDP11.

In an embodiment, vias are formed at positions where upper power patterns and lower power patterns providing the same power voltage overlap in the vertical direction. For example, vias may be formed at locations where the plurality of upper power patterns uDP1, uDP3, uDP5, uDP7, uDP9, and uDP11 providing the positive power voltage VDD and the plurality of lower power patterns dDP1, dDP3, dDP5, dDP7, dDP9, dDP11, and dDP13 providing the positive power voltage VDD overlap. Vias may be formed at locations where the plurality of upper power patterns uDP2, uDP4, uDP6, uDP8, and uDP10 providing the negative power voltage VSS and the plurality of lower power patterns dDP2, dDP4, dDP6, dDP8, and dDP10 providing the negative power voltage VSS overlap.

Referring to FIG. 11, a via may be formed at a location overlapping one of two power patches adjacent to each other. In FIG. 11, the size of the via may be similar to the size of the power patch. When vias are formed at all locations where the upper power patterns and the lower power patterns providing the same power voltage overlap, a design rule violation may occur because the vias may overlap each other. Therefore, according to an embodiment, the design rule may be complied with by forming a via only at a location that overlaps one of two power patches adjacent to each other. For example, a power patch that does not overlap any via may be located between a pair of power patches adjacent one another that each overlap a respective via.

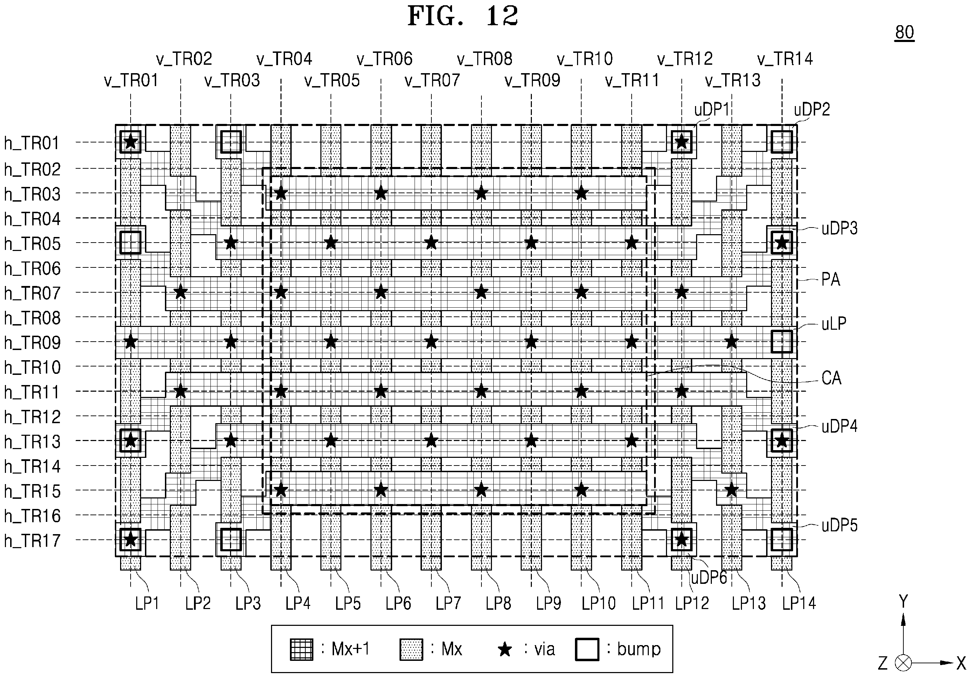

FIG. 12 is a diagram illustrating the integrated circuit including a diagonal power pattern, according to an embodiment.

Referring to FIG. 12, the Mx+1 layer of the integrated circuit 80 includes a center area CA and a peripheral area PA. The peripheral area PA may include an area that vertically overlaps a connection terminal (e.g., the solder bump 13 of FIG. 1A or the power pad 15 of FIG. 1B) that receives a power voltage. The center area CA may include an area that vertically overlaps a plurality of standard cells.

The Mx+1 layer of the integrated circuit 80 may include plurality of upper power patterns uDP1 to uDP6 and uLP. A plurality of upper power patterns uDP2, uLP, and uDP5 may provide the positive power voltage VDD. A plurality of upper power patterns uDP1, uDP3, uDP4, and uDP6 may provide the negative power voltage VSS.

A plurality of upper power patterns uDP1 to uDP5 may each have an outline extending in a direction between the first direction and the second direction in the peripheral area PA and may each have an outline extending in the first direction in the center area CA. For example, each of the upper power patterns uDP1 to uDP5 may have a first portion that extends in a direction between the first and second directions within the peripheral area PA and a second portion connected to the first portion that extends in the first direction within the center area. In other words, the plurality of upper power patterns uDP1 to uDP5 and uLP may each have an outline extending from the peripheral area PA toward the center area CA.

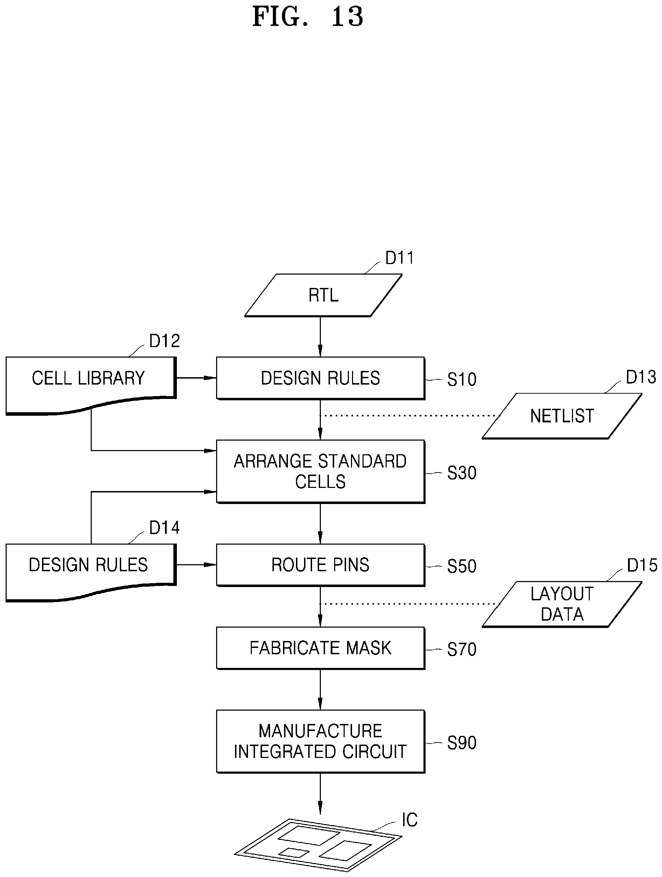

FIG. 13 is a flowchart of a method of manufacturing an integrated circuit IC, according to an embodiment. For example, the flowchart of FIG. 13 shows an example of a method of manufacturing an integrated circuit IC including standard cells. As shown in FIG. 13, the method of manufacturing the integrated circuit IC may include a plurality of operations S10, S30, S50, S70, and S90.

A cell library (or a standard cell library) D12 may include information regarding standard cells, e.g., function information, characteristic information, layout information, etc. For example, the function information may describe the logical function of each standard cell, the characteristic information may specify the electrical properties and performance characteristics of each cell and the layout information may provide physical design details for placing and routing cells on the chip.

Design rules D14 may include conditions that the layout of the integrated circuit IC needs to comply with. For example, the design rules D14 may include conditions regarding spaces between patterns, the minimum width of the patterns, a routing direction of a wiring layer, etc. in the same wiring layer. According to an embodiment, the design rules D14 defines the minimum separation distance between vias and the spacing (i.e., pitch) between tracks of a wiring layer to form a diagonal power pattern (e.g., 12).

In operation S10, a logical synthesis operation for generating netlist data D13 from Register Transfer Level (RTL) data D11 may be performed. For example, a semiconductor design tool (e.g., a logical synthesis tool) may perform a logical synthesis with reference to the cell library D12 from the RTL data D11 composed in Very High-Speed Integrated Circuits (VHSIC) Hardware Description Language (VHDL) and Verilog and generate the netlist data D13 including a bitstream or a netlist. The netlist data D13 may serve as input for place and routing, which is described below.

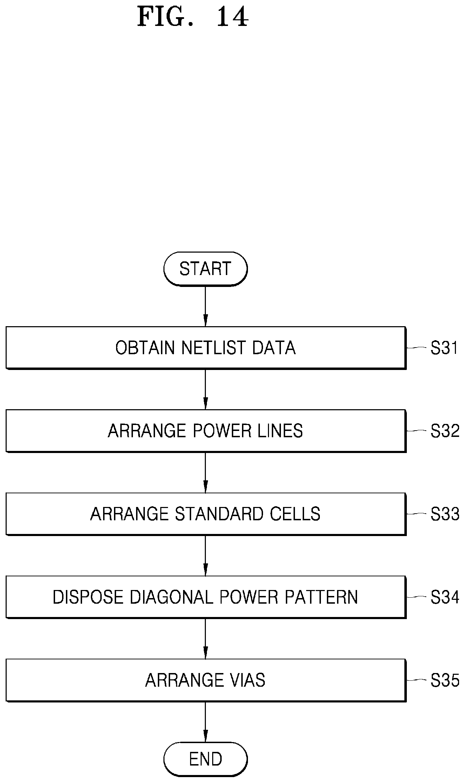

In operation S30, cells are arranged. For example, a semiconductor design tool (e.g., a P&R tool) may arrange (or place) standard cells used in the netlist data D13 with reference to the cell library D12. According to an embodiment, the semiconductor design tool arranges standard cells in rows extending along the X-direction, positions power lines along boundaries of each row, places a diagonal power pattern to supply a power voltage to the power lines, and electrically connects the standard cells may to the diagonal power pattern. An example of operation S30 is described below with reference to FIG. 14.

In operation S50, pins of the cells are routed. For example, the semiconductor design tool may generate interconnections electrically connecting output pins and input pins of arranged standard cells and generate layout data D15 defining the arranged standard cells and the interconnections. One of the interconnections may include a via of a via layer and/or a pattern of a wiring layer. The layout data D15 may have a format such as GDSII and may include geometric information regarding cells and interconnections. The semiconductor design tool may refer to the design rules D14 while routing pins of cells. The layout data D15 may correspond to the output of place and routing. Operation S50 may alone be referred to as a method of designing an integrated circuit or operations S30 and S50 may collectively be referred to as a method of designing an integrated circuit. The layout data D15 may be referred to as output data.

In operation S70, an operation of fabricating a mask is performed. For example, optical proximity correction (OPC) for correcting distortions due to characteristics of light (e.g., refraction) in photolithography may be applied to the layout data D15. Patterns on the mask may be defined to form patterns to be arranged in a plurality of layers based on OPC-applied data, and at least one mask (or photomask) for forming patterns of each of the layers may be manufactured. In some embodiments, the layout of the integrated circuit IC may be selectively modified in operation S70. This selective modification, referred to as design polishing, may serve as a post-processing step to optimize the integrated circuit IC.

In operation S90, an operation of manufacturing the integrated circuit IC is performed. For example, the integrated circuit IC may be manufactured by patterning the plurality of layers by using the at least one mask fabricated in operation S70. The initial stages of IC manufacturing, referred to as front-end-of-line (FEOL), may include processes such as planarizing and cleaning a wafer, forming a trench, forming a well, forming a gate electrode, and forming a source and a drain. Individual devices such as a transistor, a capacitor, and a resistor may be formed on a substrate through the FEOL. The later stages of the IC manufacturing after the initial stages, referred to as back-end-of-line (BEOL), may include operations such as silicidation of a gate, a source area, and a drain area, adding a dielectric, planarizing, forming holes, adding metal layers, forming vias, and forming a passivation layer. Individual devices such as a transistor, a capacitor, and a resistor may be connected to one another through the BEOL. In some embodiments, a middle-of-line (MOL) may be performed between the FEOL and the BEOL to form contacts on individual devices. Next, the integrated circuit IC may be packaged in a semiconductor package and used as a component for various applications.

FIG. 14 is a flowchart of a method of manufacturing an integrated circuit, according to an embodiment. For example, FIG. 14 is a flowchart showing an example of operation S30 of FIG. 13. Alternatively, FIG. 14 is a flowchart showing an example of operations performed between operations S30 and S50 of FIG. 13.

Referring to FIG. 14, netlist data is obtained in operation S31. For example, the netlist data may be generated as a result of logic synthesis as described above with reference to FIG. 13. The netlist data may define standard cells included in an integrated circuit and define the connection relationships between the standard cells. The netlist data may be referred to as input data.

In operation S32, power lines are arranged. As described above with reference to the drawings, the power lines extend in the first direction and may provide the positive power voltage VDD or the negative power voltage VSS to the standard cells. The power lines may extend along the boundaries of rows in which the standard cells are aligned.

In operation S33, the standard cells are arranged. The standard cells may be arranged to be concentrated in the center area CA of the integrated circuit 80.

In operation S34, a diagonal power pattern is disposed. As described above with reference to the drawings, the diagonal power pattern may have an outline identical to that of a plurality of rectangular power patches whose corner portions are aligned and overlap each other in a direction between the first direction and the second direction. The diagonal power pattern may be arranged in a wiring layer formed over the power lines. According to some embodiments, the diagonal power pattern may be disposed in two or more wiring layers.

In operation S35, vias are arranged. As described above with reference to the drawings, vias may be arranged at positions where power patterns providing the same power voltage from among power patterns arranged in two or more wiring layers overlap each other.

However, the order of operations S32 to S35 is not limited to that shown in FIG. 14. For example, the standard cells could be arranged before the power lines, the diagonal power pattern could be formed before the standard cells, etc.

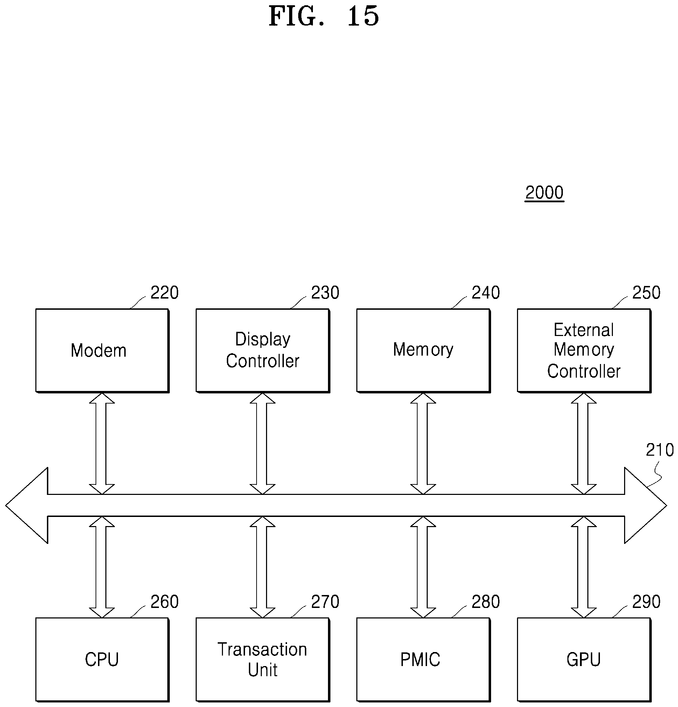

FIG. 15 is a block diagram showing a system-on-chip (SoC) according to an embodiment. An SoC 2000 is a semiconductor device and may include an integrated circuit according to an embodiment. The SoC 2000 is an implementation of complex functional blocks like an intellectual property (IP) for performing various functions on one chip. The SoC 2000 may be designed according to a method of designing an integrated circuit according to an embodiment. Therefore, the SoC 2000 may have enhanced power integrity. Referring to FIG. 15, the SoC 2000 may include a modem 220, a display controller 230, a memory 240, an external memory controller 250, a central processing unit (CPU) 260, a transaction unit 270, a PMIC 280, and a graphic processing unit (GPU) 290, wherein functional blocks of the SoC 2000 may communicate with one another through a system bus 210.

The CPU 260 capable of controlling the operation of the SoC 2000 at the highest level may control operations of the other functional blocks (for example, the modem 220 to the external memory controller 250 and the transaction unit 270 to GPU 290). The modem 220 may demodulate signals received from the outside of the SoC 2000 or modulate signals generated inside the SoC 2000 and transmit modulated signals to the outside. The external memory controller 250 may control operations for transmitting and receiving data to and from an external memory device connected to the SoC 2000. For example, programs and/or data stored in an external memory device may be provided to the CPU 260 or the GPU 290 under the control of the external memory controller 250. The GPU 290 may execute program instructions related to graphics processing. The GPU 290 may receive graphics data through the external memory controller 250 or transmit graphics data processed by the GPU 290 to the outside of the SoC 2000 through the external memory controller 250. The transaction unit 270 may monitor data transactions of functional blocks, and the PMIC 280 may control powers supplied to the functional blocks under the control of the transaction unit 270. The display controller 230 may control a display (or a display device) outside the SoC 2000, thereby transmitting data generated inside the SoC 2000 to the display. The memory 240 may include a non-volatile memory such as an electrically erasable programmable read-only memory (EEPROM) and a flash memory or a volatile memory such as a dynamic random access memory (DRAM) and a static random access memory (SRAM). The chip 10 including the diagonal power pattern of FIG. 1A or 1B may correspond to one of the modem 220, the display controller 230, the memory 240, the external memory controller 250, the CPU 260, the transaction unit 270, and the GPU 290.

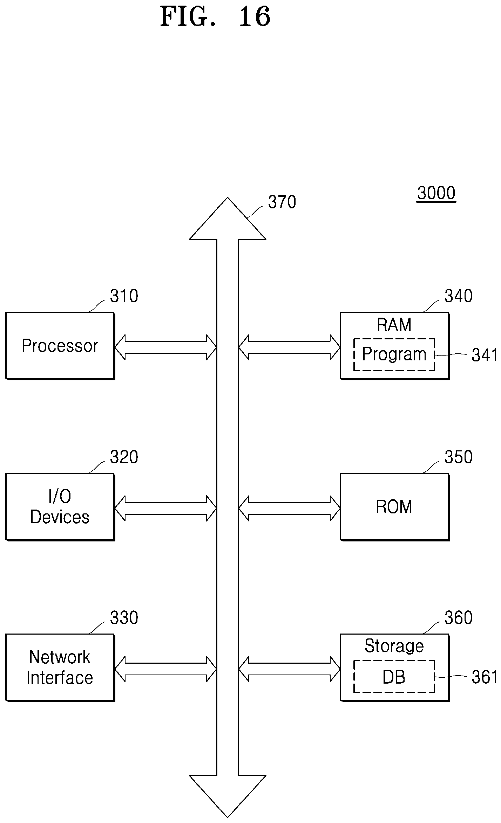

FIG. 16 is a block diagram showing a computing system including a memory storing a program according to an embodiment. At least some operations included in a method of designing an integrated circuit according to embodiments (e.g., operations of the above-stated flowchart) may be performed by a computing system (or a computer) 300.

The computing system 300 may be a stationary computing system such as a desktop computer, a workstation, or a server or a portable computing system such as a laptop computer. As shown in FIG. 16, the computing system 300 may include a processor 310, input/output devices 320, a network interface 330, a random-access-memory (RAM) 340, a read-only-memory (ROM) 350, and a storage device 360. The processor 310, the input/output devices 320, the network interface 330, the RAM 340, the ROM 350, and the storage device 360 may be connected to a bus 370 may communicate with one another through the bus 370.

The processor 310 may be referred to as a processing unit and, for example, may include at least one core, e.g., a micro-processor, an application processor (AP), a digital signal processor (DSP), a graphics processing unit (GPU), etc., capable of executing an arbitrary instruction set (e.g., Intel Architecture-32 (IA-32), 64-bit extended IA-32, x86-64, PowerPC, Sparc, MIPS, ARM, IA-64, etc.). For example, the processor 310 may access a memory, that is, the RAM 340 or the ROM 350, through the bus 370 and may execute instructions stored in the RAM 340 or the ROM 350.

The RAM 340 may store a program 341 including instruction for designing an integrated circuit according to an embodiment or at least a portion of the program 341. The program 341 may instruct the processor 310 to perform at least some operations included in a method of designing an integrated circuit such as the method of FIG. 13. In other words, the program 341 may include a plurality of instructions that may be executed by the processor 310, and the instructions included in the program 341 may instruct the processor 310 to perform at least some operations included in the above-stated flowcharts.

The storage device 360 may be of a type that does not lose stored data even when power supplied to the computing system 300 is cut off. For example, the storage device 360 may include a non-volatile memory device or a storage medium such as a magnetic tape, an optical disk, or a magnetic disk. Also, the storage device 360 may be detachable from the computing system 300. The storage device 360 may store the program 341 according to an example embodiment of the inventive concept. Before the program 341 is executed by the processor 310, the program 341 or at least a part thereof may be loaded to the RAM 340. Alternatively, the storage device 360 may store a file written in a program language, and the program 341 generated from the file by a compiler or the like or at least a part of the program 341 may be loaded to the RAM 340. Also, as shown in FIG. 16, the storage device 360 may store a database 361, and the database 361 may include information needed for designing an integrated circuit, e.g., information regarding designed blocks, the cell library D12, and/or the design rules D14 of FIG. 13.

The storage device 360 may store data to be processed by the processor 310 or data processed by the processor 310. In other words, the processor 310 may generate data by processing data stored in the storage device 360 according to the program 341 and may store the generated data in the storage device 360. For example, the storage device 360 may store the RTL data D11, the netlist data D13, and/or the layout data D15 of FIG. 13.

The input/output devices 320 may include an input device such as a keyboard and a pointing device and may include an output device like a display device and a printer. For example, through the input/output devices 320, a user may trigger execution of the program 341 through the processor 310, input the RTL data D11 and/or the netlist data D13 of FIG. 13, or check the layout data D15 of FIG. 13.

The network interface 330 may provide access to a network outside the computing system 300. For example, a network may include a plurality of computing systems and communication links, and the communication links may include wired links, optical links, wireless links, or any other types of links.

While the inventive concept has been particularly shown and described with reference to embodiments thereof, it will be understood that various changes in form and details may be made therein without departing from the scope of the following claims.

### Annex A

The present invention can also be defined by reference to the following clause:
1. An integrated circuit comprising:
   standard cells arranged in a plurality of rows extending in a first direction and adjacent to each other in a second direction intersecting the first direction;
   a plurality of power rails extending in the first direction in a first wiring layer and configured to supply power to the plurality of standard cells; and
   an upper power pattern disposed in a second wiring layer above the first wiring layer, comprising a plurality of upper power patches extending in the first direction, wherein corner portions of the upper power patches overlap in a direction between the first direction and the second direction, and configured to supply the power to the plurality of power rails.

## Claims

1. An integrated circuit comprising:
a standard cell;
a power rail extending in a first direction in a first wiring layer and configured to supply power to the standard cell; and
an upper power pattern disposed in a second wiring layer above the first wiring layer, comprising a plurality of rectangular upper power patches extending in the first direction, and configured to supply power to the power rail,
wherein corner portions of the plurality of upper power patches overlap each other in a direction between the first direction and a second direction that intersects the first direction.

2. The integrated circuit of claim 1, wherein a distance in the second direction between centers of a first upper power patch among the plurality of upper power patches and a second upper power patch among the plurality of upper power patches adjacent to the first upper power patch is less than half a sum of a width of the first upper power patch in the second direction and a width of the second upper power patch in the second direction.

3. The integrated circuit of claim 2, wherein a distance in the first direction between the centers of the first upper power patch and the second upper power patch is less than half a sum of a width of the first upper power patch in the first direction and a width of the second upper power patch in the first direction.

4. The integrated circuit of any preceding claim, further comprising a lower power pattern disposed in a third wiring layer disposed between the first wiring layer and the second wiring layer, extending in the second direction, connected to the upper power pattern, and configured to provide the power to the power rail.

5. The integrated circuit of any of claims 1 to 3, further comprising a lower power pattern disposed in a third wiring layer disposed between the first wiring layer and the second wiring layer, connected to the upper power pattern, the lower power pattern including a plurality of rectangular lower power patches extending in the second direction, and configured to supply power to the power rail,
wherein corner portions of the plurality of lower power patches overlap each in a direction between the first direction and the second direction.

6. The integrated circuit of claim 5, wherein the plurality of lower power patterns have an outline identical to an outline of the plurality of upper power patterns.

7. The integrated circuit of claim 6, further comprising a plurality of vias interconnecting the upper power pattern and the lower power pattern,
wherein, for each pair of the upper power patches adjacent to each other, one of the plurality of vias is disposed to vertically overlap one of the pair of upper power patches adjacent to each other.

8. The integrated circuit of any preceding claim, wherein a number of the plurality of upper power patches is N, and
an outline of the plurality of upper power patterns is a polygon having 4*N sides,
where N is a natural number greater than or equal to 2.

9. The integrated circuit of any preceding claim, wherein widths of the plurality of upper power patches in the second direction are identical to each other, and
widths of at least two upper power patches from among the plurality of upper power patches in the first direction are different from each other.

10. The integrated circuit of any preceding claim, wherein the plurality of upper power patches are aligned in a direction extending from a peripheral area, which vertically overlaps a connection terminal receiving the power from the outside, toward a center area within the second wiring layer.

11. An integrated circuit as claimed in any preceding claim, wherein the standard cell is a first standard cell and the power rail is a first power rail, the integrated circuit further comprising:
a plurality of standard cells arranged in a plurality of rows extending in the first direction and adjacent to each other in the second direction, the plurality of standard cells comprising the first standard cell;
a plurality of power rails extending in the first direction in the first wiring layer and configured to supply power to the plurality of standard cells, the plurality of power rail comprising the first power rail; and
wherein the upper power pattern is configured to supply the power to the plurality of power rails.

12. A method of manufacturing an integrated circuit, the method comprising:
obtaining input data that defines the integrated circuit comprising a standard cell;
arranging the standard cell in a substrate layer;
arranging a power rail extending in a first direction in a first wiring layer above the substrate layer, the power rail configured to provide a power voltage to the standard cell;
arranging an upper power pattern in a second wiring layer above the first wiring layer, the upper power pattern including a plurality of rectangular upper power patches extending in the first direction, wherein corner portions of the plurality of upper power patterns overlap each other in a direction between the first direction and a second direction intersecting the first direction, the upper power pattern configured to provide the power voltage to the power rail; and
manufacturing the integrated circuit based on the arrangement of the standard cell, the power rail and the upper power pattern.

13. The method of claim 12, wherein a distance in the second direction between centers of a first upper power patch among the plurality of upper power patches and a second upper power patch among the plurality of upper power patches adjacent to the first upper power patch is less than half a sum of a width of the first upper power patch in the second direction and a width of the second upper power patch in the second direction.

14. The method of claim 12 or claim 13, wherein a distance in the first direction between centers of the first upper power patch and the second upper power patch is less than half a sum of a width of the first upper power patch in the second direction and a width of the second upper power patch in the second direction.

15. The method of any of claims 12 to 14, further comprising disposing a lower power pattern in a third wiring layer between the first wiring layer and the second wiring layer, the lower power pattern including a plurality of rectangular lower power patches extending in the second direction and have corner portions overlapping each other in a direction between the first direction and the second direction, the lower power pattern connected to the upper power pattern and configured to provide the power to the power rail.
